# FASCICULE DE BREVET EUROPEEN

(11) **EP 3 667 415 B1**
(45) Date de publication et mention de la délivrance du brevet: **02.03.2022**
(21) Numéro de dépôt: 18212068.3
(22) Date de dépôt: 12.12.2018
(51) Int. Cl.: G03B 41/00, G07C 1/24, A63B 71/06

(54) **PROCEDE ET SYSTEME D'AFFICHAGE D'UNE IMAGE INSTANTANEE DE L'ARRIVEE D'UNE COURSE A PARTIR D'UNE IMAGE TEMPORELLE DE TYPE PHOTOFINISH**
ANZEIGEVERFAHREN UND -SYSTEM EINES SOFORTBILDS DES ZIELEINLAUFS EINES RENNENS MITHILFE EINES ZEITLICHEN BILDS VOM TYP FOTOFINISH
METHOD AND SYSTEM FOR DISPLAYING AN INSTANT IMAGE OF THE FINISH OF A RACE FROM A TEMPORAL IMAGE SUCH AS A PHOTO-FINISH

(43) Date de publication de la demande: 17.06.2020
(73) Titulaire: Swiss Timing Ltd., 2606 Corgémont (CH)
(72) Inventeur: BLONDEAU, Fabien, 2054 Chézard-St-Martin (CH); RICHARD, Pascal, 2606 Corgémont (CH)
(74) Mandataire: ICB SA

(56) Documents cités:
- WO-A1-2015/168058
- JP-A- H05 300 423
- JP-B2- 5 653 395
- US-A1- 2014 204 206

## Description

### Domaine de l'invention

L'invention concerne un procédé d'affichage d'une image instantanée de l'arrivée d'une course, notamment d'une discipline sportive, à partir d'une image temporelle de type photofinish.

L'invention concerne encore un système d'affichage d'une image instantanée de l'arrivée d'une course, notamment d'une discipline sportive, à partir d'une image temporelle de type photofinish, pour la mise en œuvre du procédé.

### Arrière-plan de l'invention

Dans une compétition de sport de course, telle qu'une course de sprint en athlétisme, de cyclisme, de ski de fonds, de patinage de vitesse ou lors d'une épreuve hippique, il est bien connu d'avoir recours à des images pour effectuer le classement des concurrents, en particulier pour les départager lorsqu'ils sont très proches. Ces images sont communément appelées « photo-finish ». Elles ont la particularité d'avoir une dimension spatiale selon la ligne d'arrivée sur l'ordonnée de l'image, et une dimension temporelle sur l'abscisse de l'image. Ainsi, chaque section verticale de l'image représente la ligne d'arrivée à un instant donné. Grâce à cette dimension temporelle, on peut définir dans quel ordre les concurrents ont atteint la ligne d'arrivée. On détermine le moment où un concurrent atteint la ligne d'arrivée en fonction d'une partie du corps ou de l'équipement de l'athlète. Les exigences sont différentes selon les sports. Par exemple, dans une course de sprint en athlétisme, le moment est défini dès qu'une partie du buste de l'athlète passe la ligne d'arrivée. Pour une course de patinage de vitesse ou de ski de fonds, le moment est défini lorsque le patin ou le pied atteint la ligne d'arrivée. Comme les arrivées sont souvent groupées, les images de type photofinish demandent une grande précision.

Pour former ces images, on a recours un système de prise de vue munie d'une caméra capable de prendre un grand nombre d'images de la ligne d'arrivée par secondes, par exemple à une cadence de mille à dix-mille images par seconde. Généralement, les images prises par la caméra sont centrées sur la ligne d'arrivée. Autrement dit, les images prises par la caméra sont des sections verticales de la ligne d'arrivée, les sections ayant par exemple une largeur d'un pixel. Pour obtenir l'image de type photofinish, on juxtapose les sections verticales les unes à la suite des autres dans l'ordre chronologique de la prise de vue. Ainsi, on obtient une image de la ligne d'arrivée en fonction du temps. Un exemple d'un tel système de prise de vues se trouve dans le document WO2015168058.

Cependant, les images de type photofinish ne permettent pas de déterminer les écarts de distance entre les concurrents à un instant donné. En effet, les concurrents n'apparaissent sur l'image qu'au moment où ils atteignent l'arrivée, de sorte qu'il n'est pas possible de déterminer ni d'afficher les distances entre concurrents à un instant donné. Sur une image de type photofinish, l'espace entre les coureurs représente un écart de temps et non une distance spatiale. Or, au moment où le premier concurrent franchit la ligne ou lorsque deux concurrents sont très proches à l'arrivée, on aimerait connaitre la distance spatiale entre le premier et le ou les suivants.

### Résumé de l'invention

L'invention a donc pour but de pallier les inconvénients de l'état de la technique susmentionné en proposant un procédé capable d'acquérir des images montrant des distances entre concurrents à l'arrivée d'une course, les images étant corrélées à une image de type photofinish.

A cet effet, l'invention concerne un procédé d'affichage d'une image instantanée de l'arrivée d'une course, notamment d'une discipline sportive, à partir d'une image temporelle de type photo-finish de la même arrivée, le procédé étant mis en œuvre par un système d'affichage comportant au moins une caméra vidéo et un dispositif d'affichage.

Le procédé est remarquable en ce qu'il comprend les étapes suivantes:
- acquérir à une première fréquence prédéterminée une première série d'images instantanées à une seule dimension spatiale de la ligne d'arrivée d'une course, la dimension spatiale étant dirigée sensiblement selon la ligne d'arrivée,
- acquérir simultanément une deuxième série d'images instantanées à deux dimensions spatiales de la même ligne d'arrivée à une deuxième fréquence prédéterminée, la première dimension spatiale étant dirigée selon la ligne d'arrivée et la deuxième dimension spatiale étant dirigée selon le sens de la course,
- former une image temporelle de type photo-finish à partir de la première série d'images instantanées, les images étant juxtaposées dans l'ordre d'acquisition, de sorte que l'abscisse de l'image temporelle représente une dimension temporelle, chaque point de l'abscisse correspondant à un instant donné de la ligne d'arrivée,
- choisir un instant de l'image temporelle,
- analyser une image à deux dimensions spatiales de la deuxième série, l'image étant corrélée à l'instant choisi pour déterminer au moins une distance, et
- afficher l'image à deux dimensions analysée avec la ou les distances déterminées.

Des formes particulières du procédé sont définis dans les revendications dépendantes 2 à 12.

Grâce à ce procédé, on peut afficher une image à deux dimensions à partir d'une image de type photofinish, en sélectionnant un instant sur l'image globale de type photofinish. En effet, des instants de l'image de type photofinish sont corrélés à une image spatiale de la ligne d'arrivée, de sorte qu'il est possible de faire le lien entre ces instants et une image montrant les écarts entre coureurs.

De plus, grâce à un logiciel de traitement d'images, on peut déterminer les distances entre coureurs sur les images à deux dimensions. Il est également possible de calculer les distances des écarts entre coureurs pour les faire apparaître sur l'image affichée.

On peut par exemple afficher l'image spatiale représentant les distances entre les coureurs en sélectionnant un instant sur l'image de type photofinish.

Ce procédé a l'avantage par exemple d'aider des spectateurs qui regardent la course sur un écran, pour se représenter l'écart entre les coureurs ou l'écart entre la ligne d'arrivée et un ou plusieurs coureurs.

Selon un mode de réalisation préférentiel de l'invention, on affiche l'image temporelle de type photo-finish pour pouvoir choisir l'instant.

Selon un mode de réalisation préférentiel de l'invention, on mesure un temps d'acquisition pendant l'acquisition des deux séries d'images, et on attribue un temps à chaque image des deux séries.

Selon un mode de réalisation préférentiel de l'invention, on effectue une étape de corrélation temporelle des deux séries d'images pour que chaque image à deux dimensions de la deuxième série d'images soit corrélée à une image à une dimension de la première série la plus proche temporellement.

Selon un mode de réalisation préférentiel de l'invention, une image de la série deuxième est corrélée à une seule image de la première série la plus proche temporellement.

Selon un mode de réalisation préférentiel de l'invention, chaque image de la première série est corrélée à une image différente de la deuxième série, de sorte que chaque instant de l'image temporelle de type photo-finish est corrélé à une image à deux dimensions de la deuxième série d'images.

Selon un mode de réalisation préférentiel de l'invention, la deuxième dimension spatiale est dirigée perpendiculairement à la première dimension.

Selon un mode de réalisation préférentiel de l'invention, on choisit l'instant en sélectionnant un point de l'image temporelle de type photofinish, l'image à deux dimensions sélectionnée étant corrélée à l'abscisse du point choisit sur l'image temporelle.

Selon un mode de réalisation préférentiel de l'invention, la première et la deuxième fréquence sont égales.

Selon un mode de réalisation préférentiel de l'invention, on analyse l'image à deux dimensions pour déterminer une distance entre deux ou plusieurs coureurs.

Selon une caractéristique technique particulière de l'invention, on analyse l'image à deux dimensions pour déterminer une distance entre la ligne d'arrivée et un ou plusieurs coureurs.

Selon une caractéristique technique particulière de l'invention, la première fréquence est comprise dans un intervalle allant de 500 à 30 000 images par seconde.

Selon une caractéristique technique particulière de l'invention, la deuxième fréquence est comprise dans un intervalle allant de 50 à 5000 images par seconde.

L'invention concerne aussi un système d'affichage d'une image instantanée de l'arrivée d'une course, notamment d'une discipline sportive, à partir d'une image temporelle de type photo-finish de la même arrivée.

A cette fin, le système comprend :
- une unité d'acquisition pour acquérir à une première fréquence prédéterminée, une première série d'images instantanées à une seule dimension spatiale de la ligne d'arrivée d'une course, la dimension spatiale étant dirigée selon la ligne d'arrivée, l'unité d'acquisition étant également configurée pour acquérir simultanément une deuxième série d'images instantanées à deux dimensions spatiales de la même ligne d'arrivée à une deuxième fréquence prédéterminée, la première dimension spatiale étant dirigée selon la ligne d'arrivée et la deuxième dimension spatiale étant dirigée selon le sens de la course,
- une unité de commande configurée pour former une image temporelle de type photo-finish à partir de la première série d'images instantanées, les images étant juxtaposées dans l'ordre d'acquisition, de sorte que l'abscisse de l'image temporelle représente une dimension temporelle, chaque point de l'abscisse correspondant à un instant donné de la ligne d'arrivée, l'unité de commande étant également configurée pour analyser une image à deux dimensions spatiales de la deuxième série, l'image étant corrélée à un instant choisi de l'image temporelle pour déterminer au moins une distance,
- une unité d'affichage pour afficher l'image à deux dimensions analysée avec la ou les distances déterminées.

Des formes particulières du procédé sont définis dans les revendications dépendantes 13 à 16.

Selon un mode de réalisation particulier de l'invention, l'unité de commande comprend une unité de mesure du temps d'acquisition pendant lequel les deux séries d'images sont acquises, l'unité de commande étant configurée pour attribuer un temps d'acquisition à chaque image des deux séries d'images, et pour corréler temporellement les deux séries d'images pour que chaque image à deux dimensions de la deuxième série d'images soit corrélée à une image à une dimension de la première série la plus proche temporellement.

Selon un mode de réalisation particulier de l'invention, l'unité d'acquisition comprend une première caméra configurée pour acquérir la première série d'images, et une deuxième caméra configurée pour acquérir la deuxième série d'images, les deux caméras étant orientée selon l'axe de la ligne d'arrivée.

Selon un mode de réalisation particulier de l'invention, l'unité d'affichage comprend un écran.

### Brève description des dessins

Les buts, avantages et caractéristiques du procédé et du système d'affichage selon l'invention apparaîtront mieux dans la description suivante d'au moins une forme d'exécution non limitative illustrée par les dessins sur lesquels :
La figure 1 est un schéma synoptique d'un procédé d'affichage selon l'invention.
La figure 2 est une représentation schématique d'une image temporelle de type photofinish de l'arrivée d'une course d'athlétisme.
La figure 3 est une représentation schématique d'une première image à deux dimensions corrélée à un premier instant de l'image temporelle.
La figure 4 est une représentation schématique d'une deuxième image à deux dimensions corrélée à un deuxième instant de l'image temporelle.
La figure 5 est une représentation schématique d'un système d'affichage selon l'invention.

### Description détaillée de l'invention

Selon l'invention, le procédé est prévu pour permettre la corrélation entre une image temporelle de type photofinish et des images à deux dimensions grâce auxquelles on peut calculer des écarts de distance à l'arrivée d'une course, par exemple entre coureurs ou entre un ou plusieurs coureurs et la ligne d'arrivée. Le procédé décrit ci-dessous porte par exemple sur une course d'athlétisme, de ski de fonds, de patinage de vitesse, de cyclisme ou une course hippique. Le procédé est mis en œuvre par un système d'acquisition et d'affichage vidéo comportant au moins une caméra vidéo et un dispositif d'affichage.

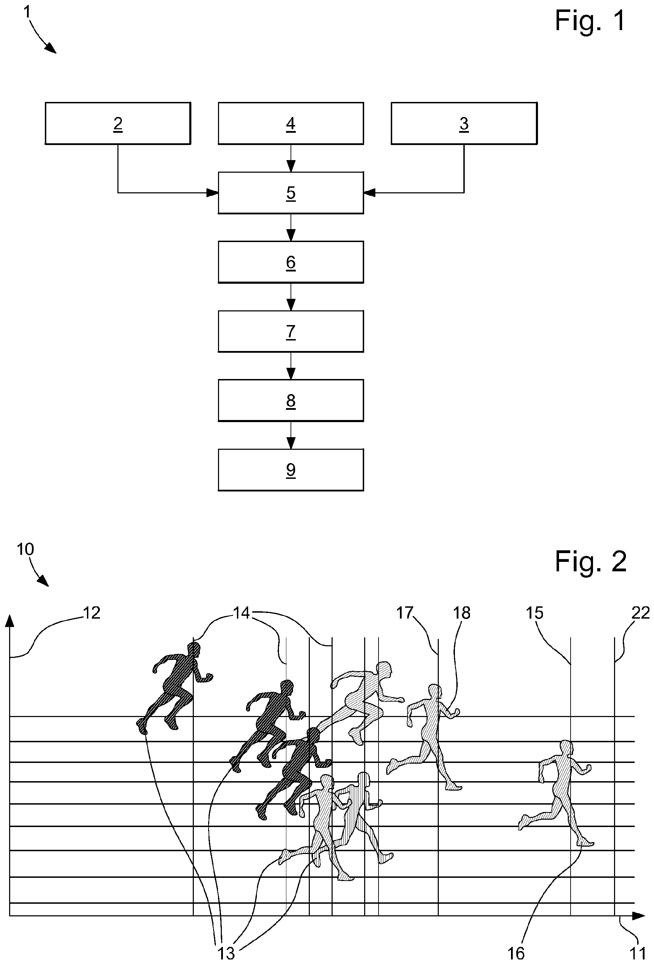

Sur la figure 1, le procédé 1 selon l'invention est un procédé d'affichage d'une image instantanée de l'arrivée d'une course, notamment d'une discipline sportive, à partir d'une image temporelle de type photo-finish de la même arrivée.

Le procédé comprend une première étape consistant à acquérir 2 une première série d'images instantanées à une seule dimension spatiale de la ligne d'arrivée d'une course à une première fréquence prédéterminée, la dimension spatiale étant dirigée selon la ligne d'arrivée. Les caméras de type photofinish actuelles permettent, par exemple, d'avoir une première fréquence comprise dans un intervalle allant de 500 à 30 000 images par seconde.

Simultanément, dans une deuxième étape, le procédé consiste à acquérir 3 une deuxième série d'images instantanées à deux dimensions spatiales de la même ligne d'arrivée à une deuxième fréquence prédéterminée. Sur l'image, la première dimension spatiale est dirigée selon la ligne d'arrivée et la deuxième dimension spatiale étant dirigée selon le sens de la course. De préférence, la deuxième dimension spatiale est dirigée perpendiculairement à la première dimension. Les caméras à deux dimensions actuelles permettent, par exemple, d'avoir une deuxième fréquence comprise dans un intervalle allant de 50 à 5000 images par seconde

Toujours simultanément, dans une troisième étape, on mesure 4 un temps d'acquisition pendant l'acquisition des deux séries d'images. Par exemple, on mesure ce temps grâce aux fréquences d'acquisition des deux séries d'images. Ainsi, on attribue un temps à chaque image des deux séries. Par conséquent on peut classer chronologiquement les images en fonction du moment où elles ont été acquises.

La quatrième étape consiste ensuite à effectuer 5 une corrélation temporelle des deux séries d'images pour qu'une image à deux dimensions de la deuxième série d'images corresponde à une image à une dimension de la première série. Autrement dit, selon le temps qui est attribué à chaque image, on fait le lien temporel entre les images de la première série et celles de la deuxième série. D'une part, on classe les images entre elles à l'intérieur de chaque série, et d'autre part, on corrèle les images entre les séries. La corrélation est effectuée en choisissant une image de la deuxième série la plus proche temporellement de l'image de la première série.

Lorsque la première fréquence est supérieure à la deuxième fréquence, il y a moins d'images à deux dimensions que d'images à une dimension. Dans ce cas, il peut y avoir plusieurs images à une dimension, qui sont corrélées à une image à deux dimensions.

Selon un mode de réalisation particulier, la première et la deuxième fréquence sont égales pour obtenir autant d'images à deux dimensions de la deuxième série que d'images à une dimension de la première série. Ainsi, chaque image de la première série est corrélée à une image de la deuxième série. Dans ce mode de réalisation, la fréquence commune est choisie en fonction de la capacité d'acquisition des caméras pour les deux types d'images, en particulier pour les images à deux dimensions.

La cinquième étape a pour fonction de former 6 une image temporelle de type photo-finish à partir de la première série d'images instantanées. A cette fin, les images sont juxtaposées dans l'ordre d'acquisition les unes à la suite des autres. Ainsi, l'abscisse de l'image temporelle représente une dimension temporelle. Chaque point de l'abscisse de l'image temporelle correspond à un instant donné de la ligne d'arrivée. Grâce à la corrélation, chaque instant de l'image temporelle de type photo-finish est par conséquent corrélé à une image à deux dimensions de la deuxième série.

Dans une sixième étape 7 on choisit un instant de l'image temporelle. Dans un mode de réalisation préférentiel, on affiche 7 l'image de type photofinish pour choisir l'instant. Pour cela, on choisit un point de l'image de type photofinish. L'abscisse de ce point donne l'instant correspondant, qui permet de sélectionner l'image à deux dimensions, corrélée à l'abscisse du point choisi. Par exemple, on choisit l'instant où le premier coureur atteint la ligne d'arrivée, pour connaitre l'écart de distance avec le deuxième coureur ou avec plusieurs coureurs qui le suivent.

Après la sélection de l'image de la deuxième série, on l'analyse 8 dans une septième étape pour déterminer au moins la distance souhaitée. Grâce à un logiciel d'analyse d'images, on peut déterminer cette distance. On analyse l'image à deux dimensions pour déterminer une distance entre la ligne d'arrivée et un ou plusieurs coureurs. Un tel logiciel est, de préférence, calibré avant la course pour être capable de calculer des distances à partir d'images à deux dimensions.

La huitième étape consiste à afficher 9 l'image à deux dimensions sélectionnée et analysée, en faisant apparaître sur l'image la ou les distances déterminées. L'image est par exemple affichée sur un écran de télévision pour montrer l'écart spatiale entre le premier coureur et les suivants. On peut simultanément montrer l'image temporelle de type photofinish pour montrer l'ordre d'arrivée des concurrents.

Grâce au procédé, il est aisé de calculer et d'afficher une image montrant un écart de distance à partir d'une image temporelle de type photofinish.

La figure 2 montre une image temporelle 10 de type photofinish obtenue à partir d'une première série d'images à une dimension de la ligne d'arrivée selon le procédé. On dit que c'est une image temporelle car l'abscisse 11 de l'image représente le temps qui s'écoule sur ligne d'arrivée. L'abscisse 11 de l'image temporelle 10 représente, par conséquent, une dimension temporelle, tandis que l'ordonnée 12 représente une dimension spatiale de la ligne d'arrivée. Chaque point de l'abscisse 11 de l'image temporelle correspond à un instant donné de la ligne d'arrivée. On peut ainsi observer les instants 14 où les coureurs 13 atteignent la ligne d'arrivée. En effet, chaque coureur 13 apparaissant sur la photo est représenté à l'instant 14 où il atteint la ligne d'arrivée de la course. Ces instants sont déterminés par des lignes perpendiculaires à l'ordonnée 11 et passant par les coureurs 13. Ainsi, l'écart entre deux coureurs 13 sur l'abscisse 11 de l'image 10 est un écart temporel et non une distance spatiale.

Selon le procédé décrit précédemment, on choisit par exemple un premier instant 15 de l'image 10. Le premier instant 15 correspond au moment où le premier coureur 16 passe la ligne d'arrivée. Dans cet exemple, on veut afficher la distance entre le premier et le deuxième coureur sur l'image corrélée de la deuxième série corrélée à cet instant 15.

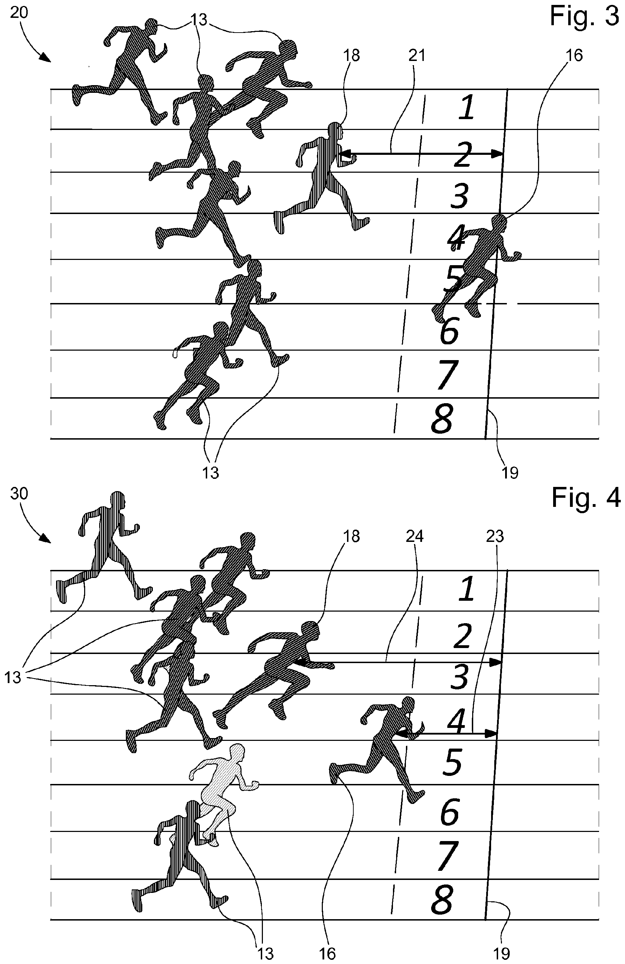

La figure 3 montre l'image de la deuxième série corrélée au premier instant choisi sur la figure temporelle 10 de la figure 2. L'mage instantanée 20 montre l'arrivée des coureurs 13, notamment le premier 16 sur la ligne d'arrivée 19, suivi par le deuxième 18. Grâce à cette image 20, on peut analyser et calculer la distance 21 entre le premier 16 le deuxième 18 à cet instant de la course. Un logiciel d'analyse d'image préalablement calibré mesure la distance 21 entre les deux coureurs, qui est ici de 2,23m. Cette image 20 est ensuite affichée avec le résultat de la mesure pour montrer la distance spatiale 21 entre les coureurs 16, 18. La distance 21 est représentée par une double flèche sur la figure

Si l'on choisit, par exemple, un deuxième instant 22 de l'image temporelle 10 de la figure 2, on obtiendra l'image corrélée 30 à deux dimensions de la figure 4. Dans cet exemple, le deuxième instant est choisi peu de temps avant l'arrivée du premier coureur 16 sur la ligne d'arrivée 21. Les distances sont calculées entre les deux premiers coureurs 16, 18 et la ligne d'arrivée 19. Le premier coureur est à 0,97m de la ligne d'arrivée, tandis que le deuxième coureur est à 3,31m de la ligne d'arrivée. Cette image 30 est ensuite affichée avec les distances apparentes conformément au procédé décrit précédemment.

L'invention se rapporte également à un système d'affichage d'une image instantanée de l'arrivée d'une course, notamment d'une discipline sportive, l'image instantanée montrant au moins un écart de distance. Le système est, en particulier, apte à mettre en œuvre le procédé décrit précédemment. Le système permet de corréler une image de type photofinish des images à deux dimensions. En outre, il permet de sélectionner une image à deux dimensions à partir de l'image temporelle de type photo-finish.

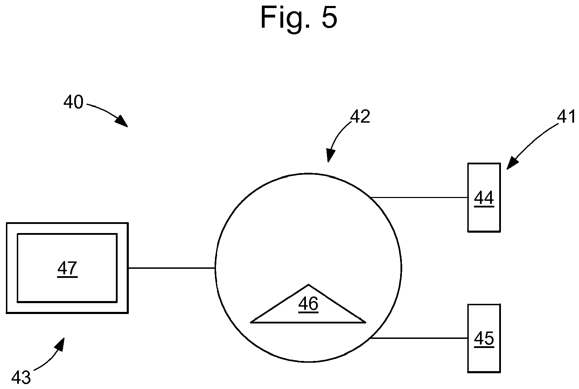

Sur la figure 5, le système 40 comprend une unité d'acquisition 41, une unité de commande 42, et une unité d'affichage 43.

Dans un mode de réalisation préférentiel, l'unité d'acquisition 41 comprend une première caméra 44 configurée pour acquérir une première série d'images à une première fréquence prédéterminée, et une deuxième caméra 45 configurée pour acquérir une deuxième série d'images à une deuxième fréquence prédéterminée. Les deux caméras 44, 45 sont orientées selon l'axe de la ligne d'arrivée, pour obtenir des images de l'arrivée de la course.

La première caméra 44 est configurée pour prendre des images instantanées à une seule dimension spatiale de la ligne d'arrivée d'une course, la dimension spatiale étant dirigée selon la ligne d'arrivée. Ce type de caméra est couramment utilisée pour former des images de type photofinish. La première caméra 44 a, par exemple, une première fréquence comprise dans un intervalle allant de 500 à 30 000 images par seconde. La première caméra 44 transmet les images à une dimension de la première série à l'unité de commande 42 pour qu'elle forme une image temporelle de type photofinish.

La deuxième caméra 45 est configurée pour acquérir une deuxième série d'images instantanées à deux dimensions spatiales de la même ligne d'arrivée. La première dimension spatiale est dirigée selon la ligne d'arrivée et la deuxième dimension spatiale étant dirigée selon le sens de la course. La deuxième caméra 45 transmet les images à deux dimensions à l'unité de commande 42. La deuxième caméra 45 a, par exemple, une deuxième fréquence comprise dans un intervalle allant de 50 à 5000 images par seconde.

L'unité de commande 42 comprend une unité de mesure 46 du temps d'acquisition pendant lequel les deux séries d'images sont acquises. La première et la deuxième série sont acquises simultanément, en particulier lors de l'arrivée de la course. Grâce à l'unité de mesure 46 du temps, l'unité de commande 42 est configurée pour attribuer un temps d'acquisition à chaque image des deux séries d'images selon le procédé. En outre, l'unité de commande 42 définit les fréquences d'acquisition des images par les caméras 44, 45. L'unité de commande 42 transmet les fréquences aux caméras 44, 45, les fréquences étant choisies en fonction des capacités d'acquisition de chaque caméra 44, 45.

L'attribution d'un temps d'acquisition à chaque image permet à l'unité de commande 42 de corréler temporellement les deux séries d'images. Ainsi, une image à deux dimensions de la deuxième série d'images est corrélée à une image à une dimension de la première série. Une image de la première série est corrélée à une image de la deuxième série la plus proche temporellement. De préférence, chaque image de la première série est corrélée à une image de la deuxième série.

L'unité de commande 42 est en outre configurée pour former une image temporelle de type photo-finish à partir de la première série d'images instantanées. Les images sont juxtaposées dans l'ordre d'acquisition, de sorte que l'abscisse de l'image temporelle représente une dimension temporelle, chaque point de l'abscisse correspondant à un instant donné de la ligne d'arrivée.

L'unité de commande 42 est également configurée pour analyser une image à deux dimensions spatiales de la deuxième série pour déterminer une distance entre coureurs ou entre la ligne d'arrivée et un ou plusieurs coureurs. Lorsqu'un instant est choisi sur l'image temporelle, l'unité de commande analyse l'image à deux dimensions corrélée à cet instant. Selon différents modes de réalisation, on prédéfinit la distance que l'on souhaite calculer, à savoir s'il est entre coureurs ou entre la ligne d'arrivée et un ou plusieurs coureurs. L'unité de commande transmet ensuite l'image analysée à l'unité d'affichage 43.

L'unité de commande 42 peut aussi avoir pour fonction d'afficher l'image temporelle pour permettre à une personne, par exemple un arbitre ou un réalisateur de média télévisuel, de choisir l'instant et la distance à calculer. Ainsi, pour choisir l'instant selon le procédé, la personne clique à un endroit de l'image affichée à l'écran. L'abscisse de l'endroit détermine l'image à deux dimensions corrélée à cet endroit. De plus, la personne peut aussi sélectionner sur l'image la distance à calculer par le logiciel d'analyse d'image. A cette fin, l'unité de commande 42 est dotée d'un écran, non représenté sur la figure, accessible à ladite personne.

L'unité d'affichage 43 comprend un écran 47 pour afficher l'image à deux dimensions analysée avec la ou les distances déterminées. L'unité d'affichage 43 peut aussi comprendre des moyens de transmission de l'image analysée, non représentés sur la figure, pour l'afficher sur un ou plusieurs écrans à distance, en particulier dans le cas de retransmission d'une épreuve sportive, par exemple à la télévision ou sur internet.

Naturellement, l'invention n'est pas limitée aux modes de réalisation décrits en référence aux figures et des variantes pourraient être envisagées sans sortir du cadre de l'invention. En particulier, les valeurs des première et deuxième fréquences d'acquisition d'images pourront être choisies avec des valeurs supérieures si l'évolution des capacités techniques des deux types de caméras le permet.

## Revendications

1. Procédé (1) d'affichage d'une image instantanée (20, 30) de l'arrivée d'une course, notamment d'une discipline sportive, à partir d'une image temporelle (10) de type photo-finish de la même arrivée, le procédé (1) étant mis en œuvre par un système d'affichage (40) comportant au moins une caméra vidéo (44, 45) et un dispositif d'affichage (43), **caractérisé en ce que** le procédé comprend les étapes suivantes:
- acquérir (2) à une première fréquence prédéterminée une première série d'images instantanées à une seule dimension spatiale de la ligne d'arrivée (19) d'une course, la dimension spatiale étant sensiblement dirigée selon la ligne d'arrivée (19),
- acquérir (3) simultanément une deuxième série d'images instantanées (20, 30) à deux dimensions spatiales de la même ligne d'arrivée (19) à une deuxième fréquence prédéterminée, la première dimension spatiale étant sensiblement dirigée selon la ligne d'arrivée (19) et la deuxième dimension spatiale étant sensiblement dirigée selon le sens de la course,
- former (6) une image temporelle (10) de type photo-finish à partir de la première série d'images instantanées, les images étant juxtaposées dans l'ordre d'acquisition, de sorte que l'abscisse (11) de l'image temporelle (10) représente une dimension temporelle, chaque point de l'abscisse (11) correspondant à un instant donné de la ligne d'arrivée (19),
- choisir (7) un instant (15, 22) de l'image temporelle (10),
- analyser (8) une image (20, 30) à deux dimensions spatiales de la deuxième série, l'image étant corrélée à l'instant (15, 22) choisi pour déterminer au moins une distance (21, 23, 24), et
- afficher (9) l'image (20, 30) à deux dimensions analysée avec la ou les distances déterminées (21, 23, 24).

2. Procédé (1) selon la revendication 1, **caractérisé en ce qu'**on affiche l'image temporelle (10) de type photo-finish pour pouvoir choisir l'instant (15, 22).

3. Procédé (1) selon la revendication 1 ou 2, **caractérisé en ce qu'**on mesure un temps d'acquisition pendant l'acquisition des deux séries d'images, et on attribue un temps à chaque image des deux séries.

4. Procédé (1) selon l'une, quelconque, des revendications précédentes, **caractérisé en ce qu'**on effectue une étape de corrélation (5) temporelle des deux séries d'images pour que chaque image (20, 30) à deux dimensions de la deuxième série d'images soit corrélée à une image à une dimension de la première série la plus proche temporellement.

5. Procédé (1) selon l'une, quelconque, des revendications précédentes, **caractérisé en ce qu'**une image (20, 30) de la deuxième série est corrélée à une seule image de la première série.

6. Procédé (1) selon l'une, quelconque, des revendications précédentes, **caractérisé en ce que** chaque image de la première série est corrélée à une image (20, 30) différente de la deuxième série, de sorte que chaque instant (15, 22) de l'image temporelle (10) de type photo-finish est corrélé à une image à deux dimensions de la deuxième série d'images.

7. Procédé (1) selon l'une, quelconque, des revendications précédentes, **caractérisé en ce que** la deuxième dimension spatiale est dirigée perpendiculairement à la première dimension.

8. Procédé (1) selon l'une, quelconque, des revendications précédentes, **caractérisé en ce qu'**on choisit l'instant (15, 22) en sélectionnant un point de l'image temporelle (10) de type photofinish, l'image à deux dimensions sélectionnée étant corrélée à l'abscisse (11) du point choisi sur l'image temporelle (10).

9. Procédé (1) selon l'une, quelconque, des revendications précédentes, **caractérisé en ce que** la première et la deuxième fréquence sont égales.

10. Procédé (1) selon l'une, quelconque, des revendications précédentes, **caractérisé en ce qu'**on analyse l'image (20, 30) à deux dimensions pour déterminer la distance (21) entre deux (16, 18) ou plusieurs coureurs.

11. Procédé (1) selon l'une, quelconque, des revendications 1 à 9, **caractérisé en ce qu'**on analyse l'image (20, 30) à deux dimensions pour déterminer la distance (23, 24) entre la ligne d'arrivée (19) et un ou plusieurs coureurs (16, 18).

12. Procédé (1) selon l'une, quelconque, des revendications précédentes, **caractérisé en ce que** la première fréquence est comprise dans un intervalle allant de 500 à 30 000 images par seconde, et la deuxième fréquence est comprise dans un intervalle allant de 50 à 5000 images par seconde.

13. Système (40) d'affichage d'une image instantanée (20, 30) de l'arrivée d'une course, notamment d'une discipline sportive, à partir d'une image temporelle (10) de type photo-finish de la même arrivée, le système étant **caractérisé en ce qu'**il comprend :
- une unité d'acquisition (41) pour acquérir à une première fréquence prédéterminée, une première série d'images instantanées à une seule dimension spatiale de la ligne d'arrivée (19) d'une course, la dimension spatiale étant dirigée selon la ligne d'arrivée, l'unité d'acquisition (41) étant également configurée pour acquérir simultanément une deuxième série d'images instantanées à deux dimensions spatiales de la même ligne d'arrivée (19) à une deuxième fréquence prédéterminée, la première dimension spatiale étant dirigée selon la ligne d'arrivée (19) et la deuxième dimension spatiale étant dirigée selon le sens de la course,
- une unité de commande (42) configurée pour former une image temporelle (10) de type photo-finish à partir de la première série d'images instantanées, les images étant juxtaposées dans l'ordre d'acquisition, de sorte que l'abscisse de l'image temporelle représente une dimension temporelle, chaque point de l'abscisse (11) correspondant à un instant donné de la ligne d'arrivée (19), l'unité de commande (42) étant également configurée pour analyser une image (20, 30) à deux dimensions spatiales de la deuxième série, l'image (20, 30) étant corrélée à un instant (15, 22) choisi de l'image temporelle (10) pour déterminer au moins une distance,
- une unité d'affichage (43) pour afficher l'image (20, 30) à deux dimensions analysée avec la ou les distances déterminées (21, 23, 24).

14. Système (30) selon la revendication 13, **caractérisé en ce que** l'unité de commande (42) comprend une unité de mesure (46) du temps d'acquisition pendant lequel les deux séries d'images sont acquises, l'unité de commande (42) étant configurée pour attribuer un temps d'acquisition à chaque image des deux séries d'images, et pour corréler temporellement les deux séries d'images pour chaque image (20, 30) à deux dimensions de la deuxième série d'images soit corrélée à une image à une dimension de la première série la plus proche temporellement.

15. Système (30) selon la revendication 13 ou 14, **caractérisé en ce que** l'unité d'acquisition (41) comprend une première caméra (44) configurée pour acquérir la première série d'images, et une deuxième caméra (45) configurée pour acquérir la deuxième série d'images, les deux caméras (44, 45) étant orientée selon l'axe de la ligne d'arrivée (19).

16. Système (30) selon l'une, quelconque, des revendications 13 à 15, **caractérisé en ce que** l'unité d'affichage (43) comprend un écran (47).

## Patentansprüche

1. Verfahren (1) zur Anzeige eines Sofortbilds (20, 30) des Ziels eines Wettkampfs, insbesondere einer Sportart, aus einem zeitlichen Bild (10) vom Fotofinish-Typ desselben Ziels, wobei das Verfahren (1) durch ein Anzeigesystem (40) umgesetzt wird, umfassend mindestens eine Videokamera (44, 45) und eine Anzeigevorrichtung (43), **dadurch gekennzeichnet, dass** das Verfahren die folgenden Schritte umfasst:
- Erfassen (2) einer ersten Reihe von Sofortbildern in einer einzigen räumlichen Dimension der Ziellinie (19) eines Wettkampfs mit einer vorherbestimmten ersten Frequenz, wobei die räumliche Dimension im Wesentlichen auf die Ziellinie (19) gerichtet ist,
- gleichzeitiges Erfassen (3) einer zweiten Reihe von Sofortbildern (20, 30) in zwei räumlichen Dimensionen derselben Ziellinie (19) mit einer vorherbestimmten zweiten Frequenz, wobei die erste räumliche Dimension im Wesentlichen auf die Ziellinie (19) gerichtet ist und die zweite räumliche Dimension im Wesentlichen auf die Richtung des Wettkampfs gerichtet ist,
- Bilden (6) eines zeitlichen Bilds (10) vom Fotofinish-Typ aus der ersten Reihe von Sofortbildern, wobei die Bilder in der Erfassungsreihenfolge aneinandergereiht werden, so dass die Abszisse (11) des zeitlichen Bilds (10) eine zeitliche Dimension darstellt, wobei jeder Punkt der Abszisse (11) einem gegebenen Zeitpunkt der Ziellinie (19) entspricht,
- Auswählen (7) eines Zeitpunkts (15, 22) des zeitlichen Bilds (10),
- Analysieren (8) eines Bilds (20, 30) in zwei räumlichen Dimensionen der zweiten Reihe, wobei das Bild mit dem ausgewählten Zeitpunkt (15, 22) korreliert wird, um mindestens eine Entfernung (21, 23, 24) zu bestimmen, und
- Anzeigen (9) des analysierten Bilds (20, 30) in zwei Dimensionen mit der oder den bestimmten Entfernungen (21, 23, 24).

2. Verfahren (1) nach Anspruch 1, **dadurch gekennzeichnet, dass** das zeitliche Bild (10) vom Fotofinish-Typ angezeigt wird, um den Zeitpunkt (15, 22) auswählen zu können.

3. Verfahren (1) nach Anspruch 1 oder 2, **dadurch gekennzeichnet, dass** eine Erfassungszeit während des Erfassens von zwei Reihen von Bildern gemessen wird und jedem Bild von zwei Reihen eine Zeit zugeordnet wird.

4. Verfahren (1) nach einem der vorhergehenden Ansprüche, **dadurch gekennzeichnet, dass** ein Schritt einer zeitlichen Korrelation (5) von zwei Reihen von Bildern durchgeführt wird, so dass jedes Bild (20, 30) in zwei Dimensionen der zweiten Reihe von Bildern mit einem zeitlich am nächsten Bild in einer Dimension der ersten Reihe korreliert wird.

5. Verfahren (1) nach einem der vorhergehenden Ansprüche, **dadurch gekennzeichnet, dass** ein Bild (20, 30) der zweiten Reihe mit einem einzigen Bild der ersten Reihe korreliert wird.

6. Verfahren (1) nach einem der vorhergehenden Ansprüche, **dadurch gekennzeichnet, dass** jedes Bild der ersten Reihe mit einem anderen Bild (20, 3) der zweiten Reihe korreliert wird, so dass jeder Zeitpunkt (15, 22) des zeitlichen Bilds (10) vom Fotofinish-Typ mit einem Bild in zwei Dimensionen der zweiten Reihe von Bildern korreliert wird.

7. Verfahren (1) nach einem der vorhergehenden Ansprüche, **dadurch gekennzeichnet, dass** die zweite räumliche Dimension senkrecht zu der ersten Dimension gerichtet ist.

8. Verfahren (1) nach einem der vorhergehenden Ansprüche, **dadurch gekennzeichnet, dass** der Zeitpunkt (15, 22) durch Auswählen eines Punkts des zeitlichen Bilds (10) vom Fotofinish-Typ ausgewählt wird, wobei das ausgewählte Bild in zwei Dimensionen mit der Abszisse (11) des ausgewählten Punkts auf dem zeitlichen Bild (10) korreliert wird.

9. Verfahren (1) nach einem der vorhergehenden Ansprüche, **dadurch gekennzeichnet, dass** die erste und die zweite Frequenz gleich sind.

10. Verfahren (1) nach einem der vorhergehenden Ansprüche, **dadurch gekennzeichnet, dass** das Bild (20, 30) in zwei Dimensionen analysiert wird, um die Entfernung (21) zwischen zwei (16, 18) oder mehreren Wettkämpfern zu bestimmen.

11. Verfahren (1) nach einem der Ansprüche 1 bis 9, **dadurch gekennzeichnet, dass** das Bild (20, 30) in zwei Dimensionen analysiert wird, um die Entfernung (23, 24) zwischen der Ziellinie (19) und einem oder mehreren Wettkämpfern (16, 18) zu bestimmen.

12. Verfahren (1) nach einem der vorhergehenden Ansprüche, **dadurch gekennzeichnet, dass** die erste Frequenz in einem Intervall liegt, das von 500 bis 30.000 Bildern pro Sekunde reicht, und die zweite Frequenz in einem Intervall liegt, das von 50 bis 5000 Bildern pro Sekunde reicht.

13. System (40) zur Anzeige eines Sofortbilds (20, 30) des Ziels eines Wettkampfs, insbesondere einer Sportart, aus einem zeitlichen Bild (10) vom Fotofinish-Typ desselben Ziels, wobei das System **dadurch gekennzeichnet ist, dass** es umfasst:
- eine Erfassungseinheit (41) zum Erfassen einer ersten Reihe von Sofortbildern in einer einzigen räumlichen Dimension der Ziellinie (19) eines Wettkampfs mit einer vorherbestimmten ersten Frequenz, wobei die räumliche Dimension auf die Ziellinie gerichtet ist, wobei die Erfassungseinheit (41) außerdem dazu konfiguriert ist, gleichzeitig eine zweite Reihe von Sofortbildern in zwei räumlichen Dimensionen derselben Ziellinie (19) mit einer vorherbestimmten zweiten Frequenz zu erfassen, wobei die erste räumliche Dimension auf die Ziellinie (19) gerichtet ist und die zweite räumliche Dimension auf die Richtung des Wettkampfs gerichtet ist,
- eine Steuereinheit (42), die dazu konfiguriert ist, ein zeitliches Bild (10) vom Fotofinish-Typ aus der ersten Reihe von Sofortbildern zu bilden, wobei die Bilder in der Erfassungsreihenfolge aneinandergereiht werden, so dass die Abszisse des zeitlichen Bilds eine zeitliche Dimension darstellt, wobei jeder Punkt der Abszisse (11) einem gegebenen Zeitpunkt der Ziellinie (19) entspricht, wobei die Steuereinheit (42) außerdem dazu konfiguriert ist, ein Bild (20, 30) in zwei räumlichen Dimensionen der zweiten Reihe zu analysieren, wobei das Bild (20, 30) mit einem ausgewählten Zeitpunkt (15, 22) des zeitlichen Bilds (10) korreliert wird, um mindestens eine Entfernung zu bestimmen,
- eine Anzeigeeinheit (43), um das analysierte Bild (20, 30) in zwei Dimensionen mit der oder den bestimmten Entfernungen (21, 23, 24) anzuzeigen.

14. System (30) nach Anspruch 13, **dadurch gekennzeichnet, dass** die Steuereinheit (42) eine Einheit (46) zur Messung der Erfassungszeit, während der die zwei Reihen von Bildern erfasst werden, umfasst, wobei die Steuereinheit (42) dazu konfiguriert ist, jedem Bild von zwei Reihen eine Erfassungszeit zuzuordnen und zwei Reihen von Bildern zeitlich zu korrelieren, so dass jedes Bild (20, 30) in zwei Dimensionen der zweiten Reihe von Bildern mit einem zeitlich am nächsten Bild in einer Dimension der ersten Reihe korreliert wird.

15. System (30) nach Anspruch 13 oder 14, **dadurch gekennzeichnet, dass** die Erfassungseinheit (41) eine erste Kamera (44), die dazu konfiguriert ist, die erste Reihe von Bildern zu erfassen, und eine zweite Kamera (45), die dazu konfiguriert ist, die zweite Reihe von Bildern zu erfassen, umfasst, wobei die zwei Kameras (44, 45) auf die Achse der Ziellinie (19) ausgerichtet sind.

16. System (30) nach einem der Ansprüche 13 bis 15, **dadurch gekennzeichnet, dass** die Anzeigeeinheit (43) einen Bildschirm (47) umfasst.

## Claims

1. Method (1) for displaying an instant image (20, 30) of the finish of a race, particularly of a sports discipline, from a temporal image (10) of the photo finish type of the same finish, the method (1) being implemented by a display system (40) comprising at least one video camera (44, 45) and a display device (43), **characterized in that** the method includes the following steps:
- acquiring (2), at a first predetermined frequency, a first series of one-spatial-dimensional instant images of the finish line (19) of a race, the spatial dimension being substantially directed along the finish line (19),
- simultaneously acquiring (3) a second series of two-spatial-dimensional instant images (20, 30) of the same finish line (19) at a second predetermined frequency, the first spatial dimension being substantially directed along the finish line (19) and the second spatial dimension being substantially directed in the direction of the race,
- forming (6) a temporal image (10) of the photo finish type from the first series of instant images, the images being juxtaposed in the order of acquisition, such that the abscissa (11) of the temporal image (10) represents a temporal dimension, each point of the abscissa (11) corresponding to a given instant at the finish line (19),
- choosing (7) an instant (15, 22) of the temporal image (10),
- analysing (8) a two-spatial-dimensional image (20, 30) of the second series, the image being correlated with the selected instant (15, 22) to determine at least one distance (21, 23, 24), and
- displaying (9) the analysed two-dimensional image (20, 30) with the determined distance or distances (21, 23, 24).

2. Method (1) according to claim 1, **characterized in that** the temporal photo finish image (10) is displayed in order to choose the instant (15, 22).

3. Method (1) according to claim 1 or 2, **characterized in that** an acquisition time is measured during the acquisition of the two series of images, and a time is attributed to each image of the two series.

4. Method (1) according to any of the preceding claims, **characterized in that** a step of temporal correlation (5) of the two series of images is performed so that each two-dimensional image (20, 30) of the second series of images is correlated with the temporally closest one-dimensional image of the first series.

5. Method (1) according to any of the preceding claims, **characterized in that** an image (20, 30) of the second series is correlated with a single image of the first series.

6. Method (1) according to any of the preceding claims, **characterized in that** each image of the first series is correlated with a different image (20, 30) of the second series, such that each instant (15, 22) of the temporal photo finish image (10) is correlated with one two-dimensional image of the second series of images.

7. Method (1) according to any of the preceding claims, **characterized in that** the second spatial dimension is directed perpendicularly to the first dimension.

8. Method (1) according to any of the preceding claims, **characterized in that** the instant (15, 22) is chosen by selecting a point on the temporal photo finish image (10), the selected two-dimensional image being correlated with the abscissa (11) of the chosen point on the temporal image (10).

9. Method (1) according to any of the preceding claims, **characterized in that** the first and second frequencies are equal.

10. Method (1) according to any of the preceding claims, **characterized in that** the two-dimensional image (20, 30) is analysed to determine the distance (21) between two (16, 18) or more competitors.

11. Method (1) according to any of claims 1 to 9, **characterized in that** the two-dimensional image (20, 30) is analysed to determine the distance (23, 24) between the finish line (19) and one or more competitors (16, 18).

12. Method (1) according to any of the preceding claims, **characterized in that** the first frequency is comprised within a range of 500 to 30,000 images per second, and the second frequency is comprised within a range of 50 to 5,000 images per second.

13. System (40) for displaying an instant image (20, 30) of the finish of a race, particularly of a sports discipline, from a temporal image of the photo finish type (10) of the same finish, the system being **characterized in that** it includes:
- an acquisition unit (41) for acquiring, at a first predetermined frequency, a first series of one-spatial-dimensional instant images of the finish line (19) of a race, the spatial dimension being directed along the finish line, the acquisition unit (41) also being configured to simultaneously acquire a second series of two-spatial-dimensional instant images of the same finish line (19) at a second predetermined frequency, the first spatial dimension being directed along the finish line (19) and the second spatial dimension being directed in the direction of the race,
- a control unit (42) configured to form a temporal image (10) of the photo finish type from the first series of instant images, the images being juxtaposed in the order of acquisition, such that the abscissa of the temporal image represents a temporal dimension, each point of the abscissa (11) corresponding to a given instant at the finish line (19), the control unit (42) also being configured to analyse a two-spatial-dimensional image (20, 30) of the second series, the image (20, 30) being correlated with a selected instant (15, 22) of the temporal image to determine at least one distance,
- a display unit (43) for displaying the analysed two-dimensional image (20, 30) with the determined distance or distances (21, 23, 24).

14. System (30) according to claim 13, **characterized in that** the control unit (42) includes a unit (46) for measuring the acquisition time during which the two series of images are acquired, the control unit (42) being configured to attribute an acquisition time to each image of the two series of images, and to temporally correlate the two series of images such that each two-dimensional image (20, 30) of the second series of images is correlated with a one-dimensional image of the first series which is temporally closest.

15. System (30) according to claim 13 or 14, **characterized in that** the acquisition unit (41) includes a first camera (44) configured to acquire the first series of images, and a second camera (45) configured to acquire the second series of images, the two cameras (44, 45) being oriented along the axis of the finish line (19).

16. System (30) according to any of claims 13 to 15, **characterized in that** the display unit (43) comprises a screen (47).
